(19) Europäisches Patentamt
European Patent Office
Office européen des brevets

(11) **EP 1 567 987 B1**

(12) **EUROPEAN PATENT SPECIFICATION**

(45) Date of publication and mention
of the grant of the patent:
**06.01.2010 Bulletin 2010/01**

(51) Int Cl.:
*G06T 9/00* *(2006.01)*     *H04N 7/26* *(2006.01)*

(21) Application number: **03767944.6**

(22) Date of filing: **19.11.2003**

(86) International application number:
**PCT/GB2003/005043**

(87) International publication number:
**WO 2004/049261 (10.06.2004 Gazette 2004/24)**

(54) **METHOD FOR COMPRESSION AND TRANSPORT OF ACTIVE GRAPHICAL IMAGES**

VERFAHREN ZUR KOMPRESSION UND ZUM TRANSPORT AKTIVER GRAPHISCHER BILDER

PROCEDE DE COMPRESSION ET DE TRANSPORT D'IMAGES GRAPHIQUES ACTIVES

(84) Designated Contracting States:
**AT BE BG CH CY CZ DE DK EE ES FI FR GB GR HU IE IT LI LU MC NL PT RO SE SI SK TR**

(30) Priority: **22.11.2002 GB 0227329**

(43) Date of publication of application:
**31.08.2005 Bulletin 2005/35**

(73) Proprietor: **ELECTROSONIC LIMITED Dartford, Kent DA2 7SY (GB)**

(72) Inventor: **MUNASINGHE, Kasturi Arachchilage Indeera London, E14 3SJ (GB)**

(74) Representative: **Hawkins, Richard Dudley et al Keltie Fleet Place House 2 Fleet Place London EC4M 7ET (GB)**

(56) References cited:
- SHEN L ET AL: "A Segmentation-Based Lossless Image Coding Method for High-Resolution Medical Image Compression" IEEE TRANSACTIONS ON MEDICAL IMAGING, IEEE INC. NEW YORK, US, vol. 16, no. 3, 1 June 1997 (1997-06-01), pages 301-307, XP000656186 ISSN: 0278-0062
- ZUCKER S W: "Region Growing: Childhood and Adolescence" COMPUTER GRAPHICS AND IMAGE PROCESSING, ACADEMIC PRESS. NEW YORK, US, vol. 5, no. 3, September 1976 (1976-09), pages 382-399, XP001149042
- TREMEAU A ET AL: "A REGION GROWING AND MERGING ALGORITHM TO COLOR SEGMENTATION" PATTERN RECOGNITION, PERGAMON PRESS INC. ELMSFORD, NY, US, vol. 30, no. 7, July 1997 (1997-07), pages 1191-1204, XP000926385 ISSN: 0031-3203
- LIU K ET AL: "COMPOUND DOCUMENT TRANSFER BETWEEN ELECTRONIC-MAIL NETWORK AND FACSIMILE TERMINALS" PROCEEDINGS OF THE REGION 10 CONFERENCE ON COMPUTER AND COMMUNICATION SYSTEMS (TENCON). HONG KONG, 24 - 27 SEPT., 1990, NEW YORK, IEEE, US, vol. 2, 24 September 1990 (1990-09-24), pages 644-648, XP000235953 ISBN: 0-87942-556-3
- DAFNER R ET AL: "Context-based space filling curves" EUROPEAN ASSOCIATION FOR COMPUTER GRAPHICS. 21ST ANNUAL CONFERENCE. EUROGRAPHICS, INTERLAKEN, SWITZERLAND, 21-25 AUG. 2000, vol. 19, no. 3, pages C209-C217, XP008028135 Computer Graphics Forum, 2000, Blackwell Publishers for Eurographics Assoc, UK ISSN: 0167-7055 cited in the application
- DE KLERK M ET AL: "Introducing high-resolution line graphics in UK teletext using differential chain coding" IEE PROCEEDINGS I (COMMUNICATION, SPEECH AND VISION), vol. 137, no. 6, 1 December 1990 (1990-12-01), pages 325-334, XP000179886 ISSN: 0956-3776

- **YEH M-C ET AL: "Scalable Ideal-Segmented Chain Coding" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY: IEEE, US, vol. 2 OF 3, 22 September 2002 (2002-09-22), pages 197-200, XP010607294 ISBN: 0-7803-7622-6**

- **EDEN M ET AL: "ON THE PERFORMANCE OF A CONTOUR CODING ALGORITHM IN THE CONTEXT OF IMAGE CODING PART I: CONTOUR SEGMENT CODING" SIGNAL PROCESSING, ELSEVIER SCIENCE PUBLISHERS B.V. AMSTERDAM, NL, vol. 8, no. 4, 1 July 1985 (1985-07-01), pages 381-386, XP000616721 ISSN: 0165-1684**

**Description**

The present invention relates to image compression and is particularly concerned with arrangements which enable images in the form of an array of pixels to be scanned in such a way that permits efficient compression, transport and decompression of the resulting image signal.

The invention also relates to the scanning of images which are created from two sequential images by combining a binary digital representation of each pixel using a bitwise or pixelwise Exclusive OR function, referred to herein an XOR function. By combining the binary digital representation of the pixels of the first image in a sequence with the XOR function of the first and second images, a digital representation of the pixels of the second image is produced. Such an XOR function is highly advantageous when compressing images, e.g. for transmission with reduced bandwidth or for storage with reduced capacity, since many sequences of images include sub-sequences of identical images which result in XOR functions which are zero-valued for the entire image. Furthermore, even when images change, it is often the case that a significant proportion of the image remains unchanged, so that the XOR function is still zero-valued for such a large portion.

The invention finds particular application in systems for transmitting active graphics images in a lossless compressed format.

The present invention is based, at least in part, on the recognition that, images, particularly graphic or photographic images, often exhibit regions of the same visual characteristic, such as colour or luminosity. In addition, such images often exhibit consistent changes in visual characteristic, with the result that an XOR function of two sequential images involving such consistent changes bears the same value for certain regions of the image.

A known scanning technique is simple raster scanning in which the pixels of each horizontal line of the image are read in sequence, from left to right, before proceeding to the next line. However, whereas such scanning is acceptable for compression purposes when an image contains regions with the same visual characteristic which extend over substantial portions of the horizontal lines of the scanned image, or when an XOR function is created between two sequential images which are identical, or when there are consistent changes between two sequential images which occur over substantial portions of the horizontal lines.

Another known scanning technique uses a predetermined space-filling curve, such as a Hilbert curve, which can be expressed mathematically by a formula and which is a "self-similar" or fractal curve. Such a curve exhibits the property that it passes through each pixel within the entire image exactly once and in such a way that local two-dimensional regions are completely scanned before passing on to adjacent region. This scanning technique provides the advantage that it more readily enables efficient compressing of either images containing two-dimensional regions in which the pixels have the same visual characteristic or XOR functions of two sequential images within a sequence in which consistent changes occur within two-dimensional regions. Since the scanning is effectively two-dimensional, greater compression efficiency is achieved.

However, such a scanning technique suffers the disadvantage that the scanning curve is pre-determined and cannot therefore take maximum advantage of two-dimensional regions within the image which include pixels having identical characteristics.

A further known scanning technique involves the use of a context-based space-filling curve which passes through each pixel of the entire image only once but which is not based on a mathematical formula but rather depends on the characteristics of the individual pixels of the image. Thus, small squares within the image are sequentially scanned according to a weight function or similar colour. However, the derivation of the scan line in such a technique is time-consuming, and efficient compression is still not guaranteed. Details of this technique are described in "Context-based Space Filling Curves" by Revital Dafner, Daniel Cohen-Or and Yossi Matias, EUROGRAPHICS '2000, Volume 19 (2000) No. 5.

It would therefore be desirable to provide a scanning technique which seeks to overcome, or at least mitigate, one or more of the above disadvantages of the above known techniques.

In an article by L. Shen et al., entitled "A Segmentation-Based Lossless Image Coding Method for High-Resolution Medical Image Compression" (IEEE Transactions on Medical Imaging, IEEE Inc. New York, US, vol. 16, no. 3, 1 June 1997 (1997-06-01), pages 301-307, XP000656186 ISSN: 0278-0062, there is described a method of lossless compression in which an image is divided into regions in each of which the pixels of the region lie within the same small dynamic grey level range. Each region is determined by an algorithm performed on the pixels within the image in which the grey level of neighbouring pixels is measured and included in a given region if the grey level is within the appropriate range for that region.

In an article by S. W. Zucker, entitled "Region Growing: Childhood and Adolescence" (Computer Graphics and Image Processing, Academic Press, New York, US, vol. 5, no. 3, September 1976 (1976-09), pages 382-399, XP001149042, there is described a region growing system for analysing an image employing an algorithm in which information acquired at an early stage in the process is used to influence the later stage.

In an article by A. Tremeau et al., entitled "A Region Growing and Merging Algorithm to Color Segmentation" (Pattern Recognition, Pergamon Press Inc. Elmsford, NY, US, Vol. 30, No. 7, July 1997 (1997-07), pages 1191-I 204, XP000926385 ISSN: 0031-3203, there is described a method of image analysis incorporating a region growing system involving colour segmentation.

In an article by K. Liu et al, entitled "Compound Document Transfer Between Electronic-Mail Network and Facsimile Terminals" (IEEE Region 10 Conference on Computer and Communication Systems (Tencon), Hong Kong, 24 - 27 Sept., 1990, New York, IEEE, US, Vol. 2, 24 September 1990 (1990-09-24), pages 644-649, XP000235953 ISBN: 0-87942-556-3, there is described a method of decoding line drawings based on spatial sampling and vector quantisation.

In accordance with the present invention there is provided a method of compressing an image containing an array of pixels, each pixel having a given value for a visual parameter, the method comprising dividing the image into a plurality of scan paths, each path comprising a sequence of adjacent pixels, the value of the visual parameter of each pixel being identical or similar to that of the preceding pixel in the sequence; encoding as a digital sequence for each of said paths: (a) the position within the array of a first end of said scan path; (b) the shape of the scan path; and (c) the value of the visual parameters of the pixels within the scan path; and compressing the resulting plurality of digital sequences.

Such a method provides the advantage that each scan path is autocorrelated and the pixel information within this scan path can therefore be efficiently compressed.

If the parameter values are identical, then this further aids efficient compression, and, if similarity is permitted, then this reduces the number of scan paths required to cover the entire image.

Each scan path is preferably determined by (a) identifying the first pixel along a linear scan of the pixel array which does not form part of a previously determined scan path; (b) identifying the value of the visual parameter of the first pixel; (c) selecting as the next pixel for the scan path one of the nearest-neighbour pixels provided that both (1) the nearest- neighbour pixel does not form one of a previously determined scan path and (II) the value of the visual parameter of the nearest-neighbour pixel bears said predetermined relationship with that of the preceding pixel; and (d) repeating step (c) until no further nearest-neighbour pixels meet both conditions (I) and (II).

If both provisos (I) and (II) are met by more than one of the nearest-neighbour pixels, then the said next pixel is preferably selected in dependence on the shape of the part of the current scan path so far determined.

The visual parameter preferably comprises colour. However, in the case of either colour or black and white images, brightness, or luminosity, could be the parameter of choice.

The position of the origin of each scan path is preferably encoded as the number of pixels along a raster scan from the previous origin of another scan path. This number can, in general, be encoded by a smaller number than can the absolute position of the pixel within the array.

The shape of the scan path is preferably encoded as a sequence of vectors, each vector within the sequence comprising a direction indicator and a length indicator. In the case of scan paths having substantial portions in the form of a straight line, this aids efficiency of compression, since a single vector can represent the entire portion.

The value of the visual parameter of each pixel is preferably encoded in accordance with a table in which a plurality of values of the visual parameter are stored at respective addresses, the visual parameter being encoded, in the case where its value is already stored in the table, by the address within the table at which the value is stored and, in the case where its value is not already stored in the table, by the value itself. The provision of such a table enables the digital representations of commonly encountered colours to be stored in the table, such that these colours can be represented in the encoded image by a smaller number, which enhances compression.

A local search is preferably performed for approximate matches. If the search is successful, the pixel is preferably encoded by the address of the approximate match and the variation from the approximate match.

In the case where the value of the visual parameter or an approximate match is not already stored in the table, the value is, subject to a replacement protocol, written into the table at an address derived from a hash function of the value. The replacement protocol is that, if there is a value already occupying the same location, it is replaced by the new value only if the usefulness of the old value, as measured by weight function, is less than a predetermined threshold. The weight function is increased for each time that the location is requested by another value. A hash function is a mathematical function which maps values of a broader domain into a smaller range and provides the advantage of speed in locating an element in a table. A common example of a hash function is a check digit or parity bit.

Each of the encoded scan paths preferably terminates with a termination marker. This serves to identify the end of each scan path and therefore aids the decoding process.

The image preferably comprises a third image which represents the difference between a first and a second image, each pixel of the third image being an Exclusive OR combination of the corresponding pixels of the first and second image.

The method preferably further comprises transmitting an image sequence comprising the first image of the sequence encoded as a bit map and the third image.

The method preferably further comprises the steps of: (a) receiving the transmitted image sequence; (b) decoding the first image from the bit map; (c) decoding the third image; and (d) combining the third image with the first image thereby to recreate the second image.

A preferred embodiment of the invention will now be described with reference to the accompanying drawings, in which:

Figure 1 illustrates the formation of an XOR function from each of five pairs of sequential graphic images;

Figure 2 is a flowchart illustrating the scanning method of a preferred embodiment of the present invention; and

Figure 3 is a flowchart illustrating how the scan and encode mechanism is implemented in a preferred embodiment of the present invention.

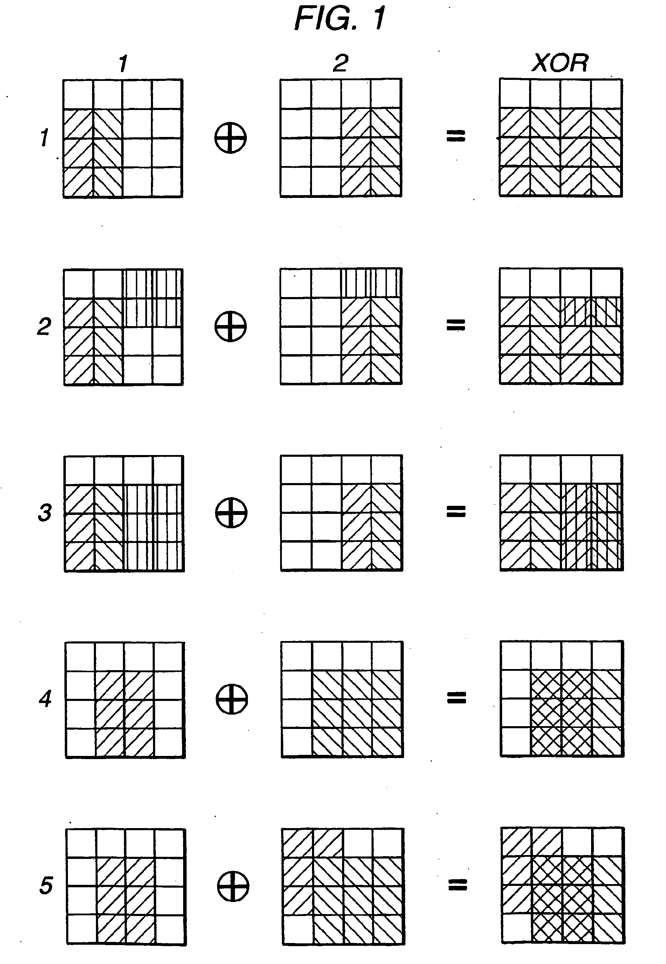

Referring to Figure 1, five different changes within graphic images are illustrated. The shadings in the images illustrate respective colours. From the pairs of images illustrated in columns 1 and 2 may be created respective "difference images", illustrated in the column headed "XOR". These are created by forming, for each pixel, a bitwise XOR function of the binary digital representation of the colour of that pixel in the first image with that of the corresponding pixel in the second image. The pixels of the resulting image bear the colour associated with the binary digital representation of the XOR function.

Row 1 represents a simple horizontal displacement of a portion of a graphic image formed from two different colours. Row 2 represents the horizontal displacement of a first, two-coloured portion such that it partially obscures a second portion having a different colour. Row 3 represents the horizontal displacement of a first, two-coloured portion such that it fully obscures a second portion having a different colour. Row 4 represents the obscuration of a first, single-coloured portion by a second, larger portion having a different colour. Row 5 represents the diagonal displacement of a first, single-coloured portion of an image, combined with the partial overlap of that portion by a second portion having a different colour.

In each case, it can be seen how the resulting XOR function is highly autocorrelated, that is to say there are large regions within the resulting XOR image which have the same colour and which therefore exhibit the potential for efficient compression, provided a suitable scanning technique is employed.

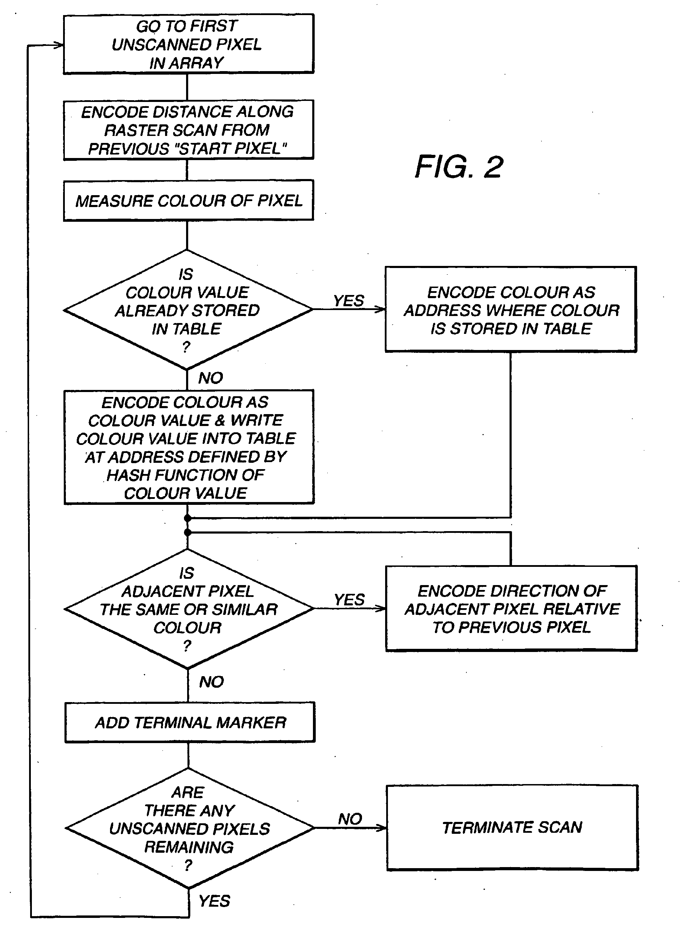

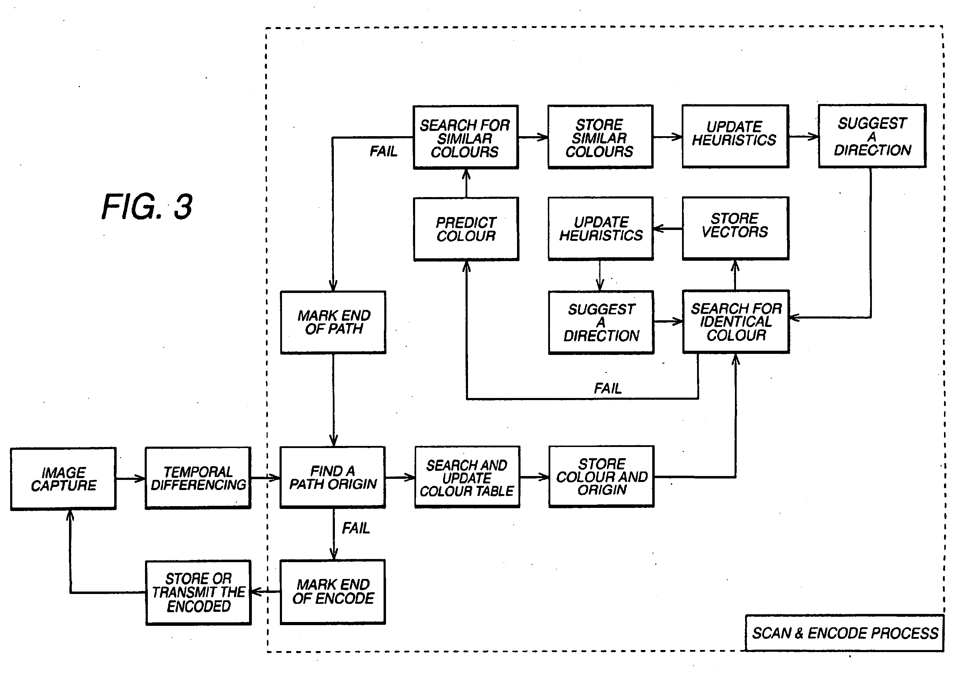

Referring to Figures 2 and 3, the flowcharts illustrate a preferred embodiment of the scanning method. The first unscanned pixel within the array is first determined. In the case of the first scan line, this will be the first pixel in the array. The position of this pixel is encoded as the distance, in number of pixels, along a raster scan, from the first pixel of the previously encoded scan path, and the encoded value is written into an output memory. The binary digital representation of the colour of this pixel is determined, and this is compared with the e.g. 63 colour values stored in a table. If it matches any of the stored values, the colour is encoded by the address of the table at which the matching colour value is stored, and this encoded address is written into the output memory. Otherwise, the colour is encoded as the binary digital representation itself, which is written into the output memory. In this case, the digital representation is written into the table at an address: defined by a hash value of the digital representation. This means that if the same colour is encountered again in a subsequent pixel within the image it can be encoded with the hash value and not the entire digital representation. Once a pixel is scanned, it is converted into a "black" pixel such that it is not scanned again.

The nearest-neighbour pixels are then considered. If none of them has the same colour, then it is determined whether any of them have a similar colour (to be defined below). If none has a similar colour, then a binary digital terminal marker is written into the output memory.

If only one of the nearest-neighbour pixels has the same colour, then the direction of this pixel in relation to the previous pixel is written into the output memory as part of a vector and the colour is encoded and written into the output memory.

If more than one of the nearest-neighbour pixels has the same colour, then a pixel is selected in accordance with a first heuristic function which depends on the previous directions taken in the same path. Again, the direction of the selected pixel in relation to the previous pixel is written into the output memory as part of a vector and the colour is encoded and written into the output memory.

If no nearest-neighbour pixels have the same colour and only one of the nearest-neighbour pixels has a similar colour, then the direction of this pixel in relation to the previous pixel is written into the output memory as part of a vector and the "similar" colour is encoded and written into the output memory.

If more than one of the nearest-neighbour pixels has a "similar" colour, then a pixel is selected in accordance with a second heuristic function which weights each direction and change of direction such that the scan path tends to remain in the locality. The reason for using this second heuristic function with similar colours is that the occurrence of similar pixels is more likely in the same neighbourhood. Again, the direction of the selected pixel in relation to the previous pixel is written into the output memory as part of a vector and the "similar" colour is encoded and written into the output memory.

This process is repeated until no nearest-neighbour pixels have the same or similar colour, and a binary digital terminal marker is written into the output memory.

The next scan line is started at the first unscanned pixel within the image, and the process repeated.

The scanning continues until no pixel within the image remains unscanned, and an "end of encoding" marker is written in the output memory. At this stage, the entire image has been divided into a number of discontinuous scan paths, each of which includes pixels having the same or a similar colour.

"Similar" colours arise in photographic images, in which neighbouring pixels often have only small differences in the red, green and blue colour components. By encoding these small differences, fewer bytes are required, resulting in enhanced compression.

In the above scanning process, if no nearest-neighbour pixels are determined to be the same as that of the previous pixel within the scan path, a determination is made as to whether it is a similar colour. This is done by making a prediction of its colour based on the current colour and the previous colour encoded in the same scan path. One example of suitable prediction formulae which can be used is:

$$\text{Prediction}_n = (\text{Colour}_n + \text{Colour}_{n-1}) / 2 + \text{PredictionError}_{n-1} / 2$$

$$\text{PredictionError}_{n-1} = (\text{Prediction}_{n-1} - \text{Colour}_n)$$

The colour of the pixel under consideration is determined, and, if the prediction error is below a predetermined threshold value, e.g. the error is small enough to be encoded as 2 or 3 bytes or the size of a table address, then the colour is regarded as similar. Highest compression can be achieved by storing prediction errors in a table. As with the newly-encountered colours, a hash function of the each prediction error is used to generate the address where that prediction error is stored. On the first occasion that a prediction error is encountered within an image, the prediction error itself is added to the output memory. On subsequent occasions, however, the hash value is stored into the output memory.

The encoded values of the image can be transmitted to a remote location during the scanning process. Alternatively, the entire encoded image can be written into the output memory and subsequently be transmitted.

At the receiving end, the encoded image is decoded using a colour table and a prediction error table which are identical to those used in the encoding process. Whenever a full digital representation of a colour or a prediction error is encountered in the encoded image, that digital representation is stored into the table at an address defined by the same hash function employed during the encoding process. Decoding continues by recreating the scan paths from the encoded start positions, vectors, colours and prediction errors until the "end of encoding marker" is detected.

The nature of the decode process is such that less processing power is required compared to encode, making this an asymmetric system particularly suitable for a software decode process.

If the image being transmitted represents an XOR "difference" images, then the decoded image is combined, again using a bitwise XOR function, with the previous image to form the new image.

The above scanning, encoding and decoding methods are particularly, but not exclusively, applicable to systems with multiple content servers and multiple clients. Such systems require a multicasting environment in which one server (a serving node) can service multiple clients (receiving nodes). Nodes can join the network at any time. When a receiving node is establishing a connection, it would broadcast a request to be connected to a specific serving node. The nodes receive this request, and the closest and least burdened node will send a "fresh flame" to the new receiving node and also the subsequent updates until the new receiving node "catches up" with the serving node. The new receiving node will additionally accumulate the updated images (XORed on top of each other until the sequence is complete) from the serving node if necessary. These updates and frames are identified by a unique sequence number.

It would be possible to record the active graphics on an offline medium for subsequent playback. The keystrokes and mouse clicks and movements would be stored in conjunction with the encoded image. This would be achieved by replacing the network transport layer with an offline medium reader/writer.

Although the present invention has been described by way of a specific embodiment, numerous modification and variations will be apparent to the skilled person, and the scope of the present invention is defined solely by the appended claims.

**Claims**

1. A method of compressing an image containing an array of pixels, each pixel having a given value for a visual parameter, the method comprising:

   dividing the image into a plurality of scan paths, each path comprising a sequence of adjacent pixels, the value of the visual parameter of each pixel being identical or similar to that of the preceding pixel in the sequence; encoding as a digital sequence for each of said paths:

   (a) the position within the array of a first end of said scan path;
   (b) the shape of the scan path; and
   (c) the value of the visual parameters of the pixels within the scan path; and

   compressing the resulting plurality of digital sequences.

2. A method as claimed in claim 1, wherein each scan path is determined by:

   (a) identifying the first pixel along a linear scan of the pixel array which does not form part of a previously determined scan path;
   (b) identifying the value of the visual parameter of the first pixel;
   (c) selecting as the next pixel for the scan path one of the nearest-neighbour pixels provided that both (I) the nearest-neighbour pixel does not form one of a previously determined scan path and (II) the value of the visual parameter of the nearest-neighbour pixel bears said predetermined relationship with that of the preceding pixel; and
   (d) repeating step (c) until no further nearest-neighbour pixels meet both conditions(I) and (II).

3. A method as claimed in claim 2, wherein, if both provisos(1) and (II) are met by more than one of the nearest-neighbour pixels, then the said next pixel is selected in dependence on the shape of the part of the current scan path so far determined.

4. A method as claimed in any preceding claim, wherein the visual parameter comprises colour.

5. A method as claimed in any preceding claim, wherein the position of the first end of each scan path is encoded as the number of pixels along a raster scan from the previous first end of another scan path.

6. A method as claimed in any preceding claim, wherein the shape of the scan path is encoded as a sequence of vectors, each vector within the sequence comprising a direction indicator and a length indicator.

7. A method as claimed in any preceding claim, wherein the value of the visual parameter of each pixel is encoded in accordance with a table in which a plurality of values of the visual parameter are stored at respective addresses, the visual parameter being encoded, in the case where its value is already stored in the table, by the address within the table at which the value is stored and, in the case where its value is not already stored in the table, by the value itself.

8. A method as claimed in claim 7, wherein, in the case where the value of the visual parameter is not already stored in the table, the value is written into the table at an address derived from a hash function of the value.

9. A method as claimed in any preceding claim, wherein each of the encoded scan paths terminates with a termination marker.

10. A method as claimed in any preceding claim, wherein the image comprises a third image which represents the difference between a first and a second image, each pixel of the third being an Exclusive OR combination of the corresponding pixels of the first and second images.

11. A method as claimed in claim 10, further comprising the step of transmitting an image sequence comprising the first image of the sequence encoded as a bit map and the third image.

12. A method as claimed in claim 11, further comprising the steps of:

(a) receiving the transmitted image sequence;
(b) decoding the first image from the bit map;
(c) decoding the third image; and
(d) combining the third image with the first image thereby to recreate the second image.

**Patentansprüche**

1. Verfahren zum Komprimieren eines ein Array aus Pixeln enthaltenden Bildes, wobei jedes Pixel einen gegebenen Wert für einen visuellen Parameter aufweist, wobei das Verfahren Folgendes umfasst:

   Unterteilen des Bildes in mehrere Scanwege, wobei jeder Weg eine Sequenz von angrenzenden Pixeln umfasst, wobei der Wert des visuellen Parameters jedes Pixels identisch oder ähnlich dem des vorausgegangenen Pixels in der Sequenz ist;
   Codieren als eine digitale Sequenz für jeden der Wege:

      (a) der Position eines ersten Endes des Scanweges innerhalb des Arrays;
      (b) der Gestalt des Scanweges und
      (c) dem Wert der visuellen Parameter der Pixel innerhalb des Scanweges und

   Komprimieren der resultierenden mehreren digitalen Sequenzen.

2. Verfahren nach Anspruch 1, wobei jeder Scanweg bestimmt wird durch:

      (a) Identifizieren des ersten Pixels entlang eines linearen Scans des Pixelarrays, der keinen Teil eines zuvor bestimmten Scanweges bildet;
      (b) Identifizieren des Werts des visuellen Parameters des ersten Pixels;
      (c) Auswählen eines der am nächsten benachbarten Pixel als das nächste Pixel für den Scanweg unter Voraussetzung, dass sowohl (I) das am nächsten benachbarte Pixel keines eines zuvor bestimmten Scanweges bildet und (II) der Wert des visuellen Parameters des am nächsten benachbarten Pixels die vorbestimmte Beziehung mit dem des vorausgegangenen Pixels trägt; und
      (d) Wiederholen des Schritts (c), bis keine Weiteren am nächsten benachbarten Pixel beide Bedingungen (I) und (II) erfüllen.

3. Verfahren nach Anspruch 2, wobei, wenn beide Bedingungen (1) und (II) von mehr als einem der am nächsten benachbarten Pixel erfüllt werden, dann das nächste Pixel in Abhängigkeit von der Gestalt des bisher bestimmten Teils des Scanweges gewählt wird.

4. Verfahren nach einem der vorhergehenden Ansprüche, wobei der visuelle Parameter Farbe umfasst.

5. Verfahren nach einem der vorhergehenden Ansprüche, wobei die Position des ersten Endes jedes Scanweges als die Anzahl von Pixeln entlang eines Rasterscans von dem vorausgegangenen ersten Ende eines anderen Scanweges codiert wird.

6. Verfahren nach einem der vorhergehenden Ansprüche, wobei die Gestalt des Scanweges als eine Sequenz von Vektoren codiert wird, wobei jeder Sektor innerhalb der Sequenz einen Richtungsindikator und einen Längenindikator umfasst.

7. Verfahren nach einem der vorhergehenden Ansprüche, wobei der Wert des visuellen Parameters jedes Pixels gemäß einer Tabelle codiert wird, in der viele Werte des visuellen Parameters an jeweiligen Adressen gespeichert sind, wobei der visuelle Parameter in dem Fall, wo sein Wert bereits in der Tabelle gespeichert ist, durch die Adresse innerhalb der Tabelle codiert wird, an der der Wert gespeichert ist, und in dem Fall, dass sein Wert nicht bereits in der Tabelle gespeichert ist, durch den Wert selbst.

8. Verfahren nach Anspruch 7, wobei in dem Fall, dass der Wert des visuellen Parameters nicht bereits in der Tabelle gespeichert ist, der Wert an einer von einer Hash-Funktion des Wertes abgeleiteten Adresse in die Tabelle geschrieben wird.

**9.** Verfahren nach einem der vorhergehenden Ansprüche, wobei jeder der codierten Scanwege mit einer Terminierungsmarkierung endet.

**10.** Verfahren nach einem der vorhergehenden Ansprüche, wobei das Bild ein drittes Bild umfasst, das die Differenz zwischen einem ersten und einem zweiten Bild darstellt, wobei jedes Pixel des dritten eine Exclusive-OR-Verknüpfung der entsprechenden Pixel des ersten und zweiten Bildes ist.

**11.** Verfahren nach Anspruch 10, weiterhin umfassend den Schritt des Übertragens einer Bildsequenz umfassend das erste Bild der Sequenz codiert als eine Bitmap und das dritte Bild.

**12.** Verfahren nach Anspruch 11, weiterhin umfassend die Schritte:

(a) Empfangen der übertragenen Bildsequenz;
(b) Decodieren des ersten Bildes aus der Bitmap;
(c) Decodieren des dritten Bildes und
(d) Verknüpfen des dritten Bildes mit dem ersten Bild, um **dadurch** das zweite Bild wiederherzustellen.

**Revendications**

**1.** Méthode de compression d'une image contenant une matrice de pixels, chaque pixel ayant une valeur donnée pour un paramètre visuel, la méthode comprenant :

la division de l'image en une pluralité de trajectoires de balayage, chaque trajectoire comprenant une séquence de pixels adjacents, la valeur du paramètre visuel de chaque pixel étant identique ou similaire à celle du pixel précédent dans la séquence ;
l'encodage d'une séquence numérique pour chacun desdites trajectoires ;

(a) la position dans la matrice d'une première extrémité de ladite trajectoire de balayage ;
(b) la forme de la trajectoire de balayage ; et
(c) la valeur des paramètres visuels des pixels dans la trajectoire de balayage ; et

la compression de la pluralité résultante de séquences numériques.

**2.** Méthode selon la revendication 1, dans laquelle chaque trajectoire de balayage est déterminée par:

(a) l'identification du premier pixel le long d'un balayage linéaire de la matrice de pixels qui ne forme pas partie d'une trajectoire de balayage précédemment déterminée ;
(b) l'identification de la valeur du paramètre visuel du premier pixel ;
(c) la sélection de l'un des pixels les plus proches en tant que pixel suivant de la trajectoire de balayage, à condition que (I) le pixel le plus proche ne forme pas l'une des trajectoires de balayage précédemment déterminées et que (II) la valeur du paramètre visuel du pixel le plus proche respecte ladite relation prédéterminée avec celle du pixel précédent ; et
(d) la répétition de l'étape (c) jusqu'à ce qu'il n'y ait plus de pixel pour satisfaire à la fois les conditions (I) et (II).

**3.** Méthode selon la revendication 2, dans laquelle, lorsque les deux conditions (I) et (II) sont satisfaites par plus d'un des pixels voisins, ledit pixel suivant est choisi selon la forme de la partie de la trajectoire de balayage en cours déterminée jusqu'ici.

**4.** Méthode selon l'une quelconque des revendications précédentes, dans laquelle le paramètre visuel comprend la couleur.

**5.** Méthode selon l'une quelconque des revendications précédentes, dans laquelle la position de la première extrémité de chaque trajectoire de balayage est encodée en tant que nombre de pixels le long d'un balayage ligne par ligne à partir de l'extrémité précédente d'une autre trajectoire de balayage.

**6.** Méthode selon l'une quelconque des revendications précédentes, dans laquelle la forme de la trajectoire de balayage est encodée en tant que séquence de vecteurs, chaque vecteur dans la séquence comprenant un indicateur de direction et un indicateur de longueur.

7. Méthode selon l'une quelconque des revendications précédentes, dans laquelle la valeur du paramètre visuel de chaque pixel est encodée selon un tableau dans lequel une pluralité de valeurs du paramètre visuel sont enregistrées aux adresses respectives, le paramètre visuel étant encodé, dans le cas où sa valeur est déjà enregistrée dans le tableau, par l'adresse dans le tableau à laquelle la valeur est enregistrée et, dans le cas où sa valeur n'est pas déjà enregistrée dans le tableau, par la valeur elle-même.

8. Méthode selon la revendication 7, dans laquelle, dans le cas où la valeur du paramètre visuel n'est pas déjà enregistrée dans le tableau, la valeur est écrite dans le tableau à une adresse dérivée d'une fonction de hachage de la valeur.

9. Méthode selon l'une quelconque des revendications précédentes, dans laquelle chacune des trajectoires de balayage encodées se termine par un marqueur de fin.

10. Méthode selon l'une quelconque des revendications précédentes, dans laquelle l'image comprend une troisième image qui représente la différence entre une première et une seconde images, chaque pixel de la troisième étant une combinaison OU exclusif des pixels correspondants de la première et de la seconde images.

11. Méthode selon la revendication 10, comprenant en outre l'étape de transmission d'une séquence d'images comprenant la première image de la séquence encodée en tant que matrice de pixels et de la troisième image.

12. Méthode selon la revendication 11, comprenant en outre les étapes de :

(a) réception de la séquence d'image transmise ;
(b) décodage de la première image à partir de la matrice de pixels ;
(c) décodage de la troisième image ; et
(d) combinaison de la troisième image et de la première image pour recréer ainsi la seconde image.

# FIG. 1

**FIG. 2**

```
        ┌──────────────────────┐
        │    GO TO FIRST       │
   ┌───▶│  UNSCANNED PIXEL     │
   │    │     IN ARRAY         │
   │    └──────────┬───────────┘
   │               │
   │    ┌──────────▼───────────┐
   │    │ ENCODE DISTANCE ALONG│
   │    │   RASTER SCAN FROM    │
   │    │ PREVIOUS "START PIXEL"│
   │    └──────────┬───────────┘
   │               │
   │    ┌──────────▼───────────┐
   │    │ MEASURE COLOUR OF PIXEL│
   │    └──────────┬───────────┘
   │               │
   │          ╱────▼────╲                    ┌──────────────────────┐
   │         ╱    IS      ╲        YES        │  ENCODE COLOUR AS    │
   │        ╱ COLOUR VALUE  ╲─────────────────▶│ ADDRESS WHERE COLOUR │
   │        ╲ ALREADY STORED╱                 │  IS STORED IN TABLE  │
   │         ╲  IN TABLE   ╱                   └──────────┬───────────┘
   │          ╲    ?     ╱                               │
   │           ╲───┬───╱                                 │
   │            NO │                                     │
   │    ┌──────────▼───────────┐                         │
   │    │  ENCODE COLOUR AS    │                         │
   │    │ COLOUR VALUE & WRITE │                         │
   │    │ COLOUR VALUE INTO TABLE│                       │
   │    │ AT ADDRESS DEFINED BY│                         │
   │    │   HASH FUNCTION OF   │                         │
   │    │   COLOUR VALUE       │                         │
   │    └──────────┬───────────┘                         │
   │               ├─────────────────────────────────────┘
   │          ╱────▼────╲                    ┌──────────────────────┐
   │         ╱    IS      ╲        YES        │ ENCODE DIRECTION OF  │
   │        ╱ ADJACENT PIXEL╲────────────────▶│ ADJACENT PIXEL RELATIVE│
   │        ╲THE SAME OR SIMILAR╱             │  TO PREVIOUS PIXEL   │
   │         ╲   COLOUR   ╱                    └──────────────────────┘
   │          ╲    ?     ╱
   │           ╲───┬───╱
   │            NO │
   │    ┌──────────▼───────────┐
   │    │  ADD TERMINAL MARKER │
   │    └──────────┬───────────┘
   │               │
   │          ╱────▼────╲
   │         ╱   ARE      ╲       NO          ┌──────────────────────┐
   │        ╱ THERE ANY    ╲─────────────────▶│   TERMINATE SCAN     │
   │        ╲UNSCANNED PIXELS╱                 └──────────────────────┘
   │         ╲ REMAINING  ╱
   │          ╲    ?     ╱
   │           ╲───┬───╱
   │           YES │
   └───────────────┘
```

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Revital Dafner ; Daniel Cohen-Or ; Yossi Matias.** Context-based Space Filling Curves. *EUROGRAPHICS '2000,* 2000, vol. 19 (5
- A Segmentation-Based Lossless Image Coding Method for High-Resolution Medical Image Compression. **L. Shen et al.** IEEE Transactions on Medical Imaging. IEEE Inc, 01 June 1997, vol. 16, 301-307
- Region Growing: Childhood and Adolescence. **S. W. Zucker.** Computer Graphics and Image Processing. Academic Press, September 1976, vol. 5, 382-399

- A Region Growing and Merging Algorithm to Color Segmentation. **A. Tremeau et al.** Pattern Recognition. Pergamon Press Inc, July 1997, vol. 30, 1191-I 204
- Compound Document Transfer Between Electronic-Mail Network and Facsimile Terminals. **K. Liu et al.** IEEE Region 10 Conference on Computer and Communication Systems (Tencon), Hong Kong. IEEE, 24 September 1990, vol. 2, 644-649